# FASCICULE DE BREVET EUROPEEN

(11) **EP 1 783 049 B1**
(45) Date de publication et mention de la délivrance du brevet: **30.04.2008**
(21) Numéro de dépôt: 06021787.4
(22) Date de dépôt: 18.10.2006
(51) Int. Cl.: B64C 27/615

(54) **Pale de giravion munie d'un volet orientable à l'aide d'au moins une rotule principale dont le premier arbre est solidaire dudit volet**
Rotorblatt mit einer verstellbaren Klappe, die mittels eines Hauptkugelgelenkes montiert ist, wobei eine erste Achse mit der Klappe fest verbunden ist.
Rotor blade provided with a moveable flap by means of a main ball joint, whereby a main shaft is fixed to the flap

(30) Priorité: 26.10.2005 FR 0510916
(43) Date de publication de la demande: 09.05.2007
(73) Titulaire: EUROCOPTER, 13725 Marignane (FR)
(72) Inventeur: Lorin de la Grandmaison, Francois, 56700 Hennebont (FR); Morant, Michel, 13320 Bouc Bel Air (FR); Ardesi, Olivier, 13090 Aix En Provence (FR); Gaffiero, Jacques, 75017 Paris (FR)
(74) Mandataire: Renaud-Goud, Thierry

(56) Documents cités:
- DE-U1- 20 320 625
- FR-A- 2 770 826
- US-A1- 2002 021 964
- US-B1- 6 454 207

## Description

La présente invention concerne une pale active de giravion munie à son bord de fuite d'un volet orientable, à l'aide d'au moins une rotule principale, commandé localement par un dispositif électromécanique intégrant un actionneur linéaire.

En effet, pour améliorer les performances aéroaccoustiques, vibratoires et aérodynamiques des pales d'un rotor principal d'avancement et de sustentation de giravion, il est avantageux de disposer un volet orientable au niveau du bord de fuite de chaque pale, dénommé par commodité volet de bord de fuite.

L'angle de braquage du volet par rapport à la pale est de l'ordre de plus ou moins. 10 degrés à une fréquence de l'ordre de 30Hz. Pour être efficace, l'angle de braquage varie de façon active au cours du temps en fonction de nombreux paramètres tels que la position de la pale autour de l'axe du rotor principal, position dite « azimut », la vitesse de rotation du rotor principal et les mouvements de la pale en pas, en battement et en traînée.

Compte tenu des dimensions de la pale ainsi que des contraintes exercées sur le volet et la pale dues aux mouvements de battement, de traînée, et de pas de cette dernière, on comprend aisément les difficultés à vaincre pour obtenir un volet fiable, léger et répondant aux attentes du constructeur et des utilisateurs.

On connaît, par le document US 2002/0021964, un premier type de pale muni d'un volet- Les parties supérieure et inférieure du bord d'attaque du volet ont une forme convexe alors que la partie centrale de ce bord d'attaque a une forme concave. Ainsi, le bord d'attaque du volet a une forme en ε.

En outre, les parties supérieure et inférieure sont chacune reliées à un actionneur alors que la partie centrale concave est disposée contre un genou solidaire de la pale. Par conséquent, en activant l'un ou l'autre des actionneurs, le volet bascule autour du genou de façon à présenter l'inclinaison souhaitée.

Toutefois, sous l'effet des contraintes exercées sur la pale et le volet lors d'un vol, notamment provoquées par des mouvements de battement, il y a un risque de glissement du volet le long du genou ce qui pourrait provoquer une usure prématurée, voire même selon le pire des scénarii un blocage du volet rendant ce dernier inutilisable et dangereux.

De plus, on se rend bien compte que la forme globale du volet et plus particulièrement du bord d'attaque de ce volet n'est pas optimisée d'un point de vue aérodynamique ce qui peut éventuellement être la cause de désagréments acoustiques ou vibratoires et de dégradations des performances aérodynamiques.

Par ailleurs, on connaît selon le document US 6 454 207, un deuxième type de pale comportant un volet au niveau de son bord de fuite.

Le volet est fixé à la pale par un axe longitudinal, c'est-à-dire disposé selon l'envergure de la pale, qui traverse le volet. Par suite, le volet est apte à tourner autour de cet axe longitudinal en étant mis en mouvement par une bielle articulée solidaire de l'intrados du volet, cette bielle étant elle-même commandée par un actionneur. La bielle se situe donc partiellement à l'extérieur de l'ensemble pale/volet ce qui nuit à l'aérodynamisme de l'ensemble.

Ce deuxième type d'architecture, pour laquelle le volet tourne autour d'un axe, présente encore l'inconvénient d'occasionner un éventuel blocage du volet. En effet, il ne faut pas perdre de vue que les contraintes mécaniques exercées sur le volet et la pale au cours du vol sont très importantes. Il y a par conséquent un risque non négligeable d'assister à une déformation de l'axe, le volet ne pouvant de ce fait plus être braqué à l'inclinaison souhaitée.

Enfin, on connaît par le document FR 2 770 826, un troisième type de pale équipée d'un volet. Désormais, le volet n'est pas relié à la pale par un axe longitudinal mais par deux tourillons disposés de chaque côté du volet. En outre, le volet est muni d'un bras flexible qui est positionné à l'intérieur de la pale en étant relié, via un levier, à un ensemble de deux moteurs rotatifs agissant sur des excentriques coaxiaux. A l'aide de cet ensemble de deux moteurs rotatifs, le dispositif commande l'inclinaison du bras flexible et ainsi du volet.

Néanmoins, tout comme pour le deuxième type de pale, les tourillons autour desquels le volet bascule ne semblent pas présenter totalement une robustesse suffisante pour garantir le bon fonctionnement du système pendant un temps raisonnable.

La présente invention a pour objet de proposer une pale active munie d'un volet permettant de s'affranchir des limitations des pales mentionnées ci-dessus.

Par ailleurs, il est bon de rappeler que les pales de giravion sont extrêmement minces, c'est-à-dire que l'épaisseur relative des sections de la pale est faible, de sorte que J'épaisseur de la pale est faible et ce particulièrement au niveau de leur bord de fuite ou l'épaisseur diminue. Ainsi, l'épaisseur maximale du volet est de l'ordre de 20 millimètres. Il va s'en dire que dans un tel cas le dispositif autorisant l'inclinaison du volet par rapport à la pale doit être compact pour pouvoir être logé dans la pale et/ou le volet.

De plus, comme nous l'avons vu précédemment, il est important que l'ensemble soit robuste pour éviter une usure prématurée voire même un blocage du volet qui pourrait s'avérer catastrophique.

Enfin, pour réduire les efforts inertiels exercés sur la pale et le volet, il est impératif que la masse de l'ensemble reste la plus faible possible.

Selon l'invention, une pale de rotor de giravion comporte au moins un volet orientable de bord de fuite, ce volet étant apte à effectuer un pivotement autour d'un axe charnière virtuel orienté sensiblement selon l'envergure de la pale et du volet. La pale est remarquable en ce que le volet est pourvu d'au moins une rotule principale munie d'une cage interne ainsi que d'une cage externe et d'un premier arbre solidaire dudit volet, la partie avant de la cage externe de la rotule principale étant reliée à un actionneur linéaire qui est agencé dans la pale et qui permet le pivotement du volet, le premier arbre de la rotule principale étant perpendiculaire à l'axe charnière virtuel de rotation du volet.

Cette configuration est très originale puisque l'arbre de la rotule principale n'est pas confondu avec l'axe charnière virtuel de rotation du volet ou du moins dirigé selon ce dernier. Cela revêt une grande importance dans la mesure où il devient possible d'agencer une rotule dans un espace qui est pourtant très exigu.

L'utilisation d'une telle rotule permet de répondre parfaitement au problème, la robustesse de ces équipements mécaniques n'étant plus à démontrer. De plus, il n'est plus nécessaire de pourvoir le volet d'un axe longitudinal ou de tourillons afin de le faire pivoter ce qui limite les risques de blocage de ce volet.

Comme décrit à l'aide des figures, afin de limiter l'usure de la rotule principale, cette dernière est si nécessaire précontrainte.

De plus, la rotule principale est avantageusement autolubrifiée, les faces des cages externe et interne en contact les unes avec les autres étant recouvertes de téflon par exemple.

En outre, le pivotement du volet est optimisé lorsque l'axe de symétrie de la rotule principale est agencé sensiblement à 25 % de la corde du volet en partant du bord d'attaque de ce volet.

Par ailleurs, le premier arbre de la rotule principale n'est pas solidaire de la pale mais du volet. De plus, la partie avant de la cage externe de la rotule principale est reliée à l'actionneur par une unique bielle, coudée selon le besoin.

Dans ces conditions, le volet comporte une rotule de fixation munie d'une cage externe ainsi que d'une cage interne et d'un deuxième arbre solidaire du volet, la partie avant de la cage externe de la rotule de fixation étant solidaire d'un point fixe de ladite pale. La cinématique du volet est alors la suivante : l'actionneur tire ou pousse la cage externe de la rotule principale. La cage externe de la rotule de fixation ne pouvant pas être mis en mouvement puisque solidaire d'un point fixe de la pale, les premier et deuxième arbres s'inclinent ce qui permet au volet de pivoter.

Selon un premier mode de réalisation, les premier et deuxième arbres sont confondus ce qui implique que les rotules principale et de fixation sont l'une au dessus de l'autre.

Selon un deuxième mode de réalisation, les premier et deuxième arbres sont décalés l'un par rapport à l'autre selon l'envergure du volet mais aussi selon un axe vertical.

Enfin, quelque soit le mode de réalisation choisi, en fonction de l'actionneur, de la dimension du volet et des contraintes exercées en vol, un nombre plus important d'actionneurs et de rotules principales est envisageable, un actionneur étant associé à une rotule principale. Par suite, lorsque la pale comporte deux actionneurs, la pale est munie de deux rotules principales, la distance séparant les deux rotules principales selon l'envergure du volet étant de préférence égale à la moitié de l'envergure du volet.

L'invention et ses avantages apparaîtront avec plus de détails dans le cadre de la description suivante, qui illustre des exemples de réalisation préférés, donnés sans aucun caractère limitatif, en référence aux figures annexées qui représentent :
- la figure 1, une coupe schématique d'une pale selon un premier mode de réalisation
- la figure 2, la cinématique mise en oeuvre par le premier mode de réalisation,
- la figure 3, une vue schématique du deuxième mode de réalisation, et
- la figure 4, une variante de l'invention.

Les éléments présents dans plusieurs figures distinctes sont affectés d'une seule et même référence.

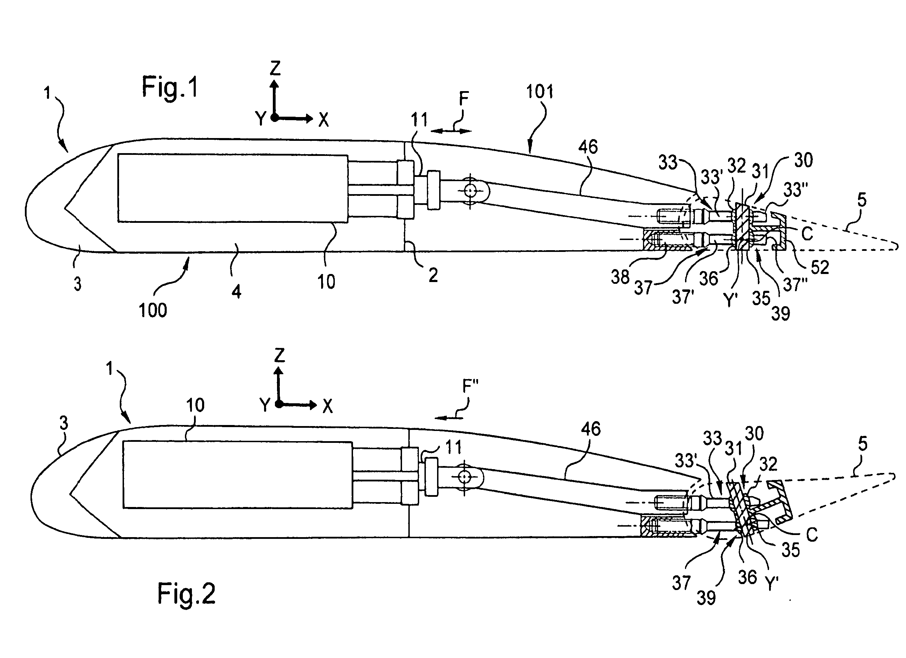

La figure 1 présente une coupe schématique de l'invention selon un premier mode de réalisation.

Une pale 1 de giravion est munie d'un volet 5 de bord de fuite. De plus, un actionneur électromécanique 10 est agencé à l'intérieur du caisson 4 de la pale 1 disposé entre le longeron 3 et la nervure 2 en forme de U de la pale 1.

L'actionneur 10 est du type linéaire, son extrémité 11 étant à même de se déplacer selon l'axe X conformément aux flèches F. On notera la présence de trappes d'accès 100 sur l'intrados de la pale 1 pour permettre des opérations de maintenance sur l'actionneur 10 par exemple.

En outre, l'actionneur 10 permet au volet 5 de bord de fuite de pivoter autour de l'axe charnière virtuel Y' afin d'améliorer les performances aéroaccoustiques, aérodynamiques et vibratoires de la pale 1. II est commandé par un boîtier électronique, non représenté sur les figures, qui fournit la loi de pilotage du volet (angle de braquage/fréquence) en fonction de la configuration de vol du giravion. L'actionneur 10 est de plus alimenté électriquement par un collecteur disposé au niveau du rotor du giravion via un circuit électrique intégré à la pale 1 le long de son envergure.

En mode actif, des capteurs de position envoient des signaux au boîtier électronique pour que ce dernier puisse asservir le volet. Pour certaines configurations de vol, le système sera en mode passif, le volet 5 restant alors immobilisé en position dans le prolongement du profil de base de la pale 1.

Selon la nécessité, un ou plusieurs volets sont agencés sur la pale 1 selon son envergure, de préférence au voisinage de l'extrémité libre de celle-ci.

Par ailleurs, afin d'être orienté, le volet 5 comporte une rotule principale 30 qui comporte un premier arbre 31, une cage interne 32 et une cage externe 33, les cages interne 32 et externe 33 étant disposées à l'intérieur du volet 5. Le premier arbre 31 de la rotule principal 30 est solidaire du volet 5, par le biais d'une fixation à la nervure 52 de ce volet 5 par exemple. En outre et de préférence, le premier arbre 31 de la rotule principale 30 est sensiblement perpendiculaire à l'axe charnière virtuel Y' du volet 5.

De plus, la partie avant 33' de la cage externe 33 de la rotule principale 30 est reliée à l'extrémité 11 de l'actionneur 10 par une unique bielle coudée 46. A ce propos, on note qu'une trappe d'accès 101 est prévue sur l'extrados de la pale 1 afin qu'un opérateur puisse accéder à l'unique bielle 46 si nécessaire.

En outre, la partie arrière 33" de la cage externe 33 n'est pas solidaire du volet. Par suite, pour faire pivoter le volet à l'aide de la rotule principale, il faut finalement faire basculer le premier arbre 31.

Par conséquent, le volet 5 comporte une rotule de fixation 39 munie d'un deuxième arbre 35 solidaire du volet 5, d'une cage interne 36 et d'une cage externe 37. La partie avant 37' de la cage externe 37 de la rotule de fixation 39 est solidaire d'un point fixe de la pale 1 à l'aide d'un moyen de fixation 38, éventuellement réglable pour faciliter le positionnement du volet 5. L'axe charnière virtuel Y' autour duquel le volet 5 est à même de tourner passe alors par le centre C de la rotule de fixation 39.

Cet agencement est très intéressant puisque la liaison du volet 5 à la pale 1 est aisément réalisable mais aussi d'un point de vue aérodynamique dans la mesure où il n'y a pas de protubérance ou de décrochement perturbateur lié à une chape disposée sur le bord de fuite d'une pale par exemple.

Selon un premier mode de réalisation, les premier 31 et deuxième 35 arbres sont confondus, c'est-à-dire qu'ils ne constituent finalement qu'un seul et unique arbre.

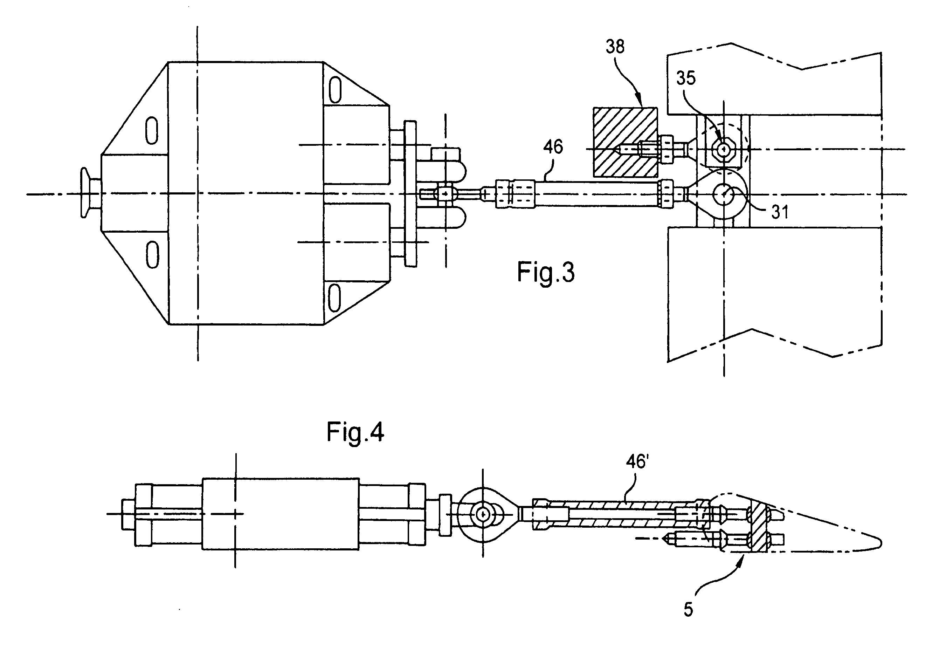

Selon un deuxième mode de réalisation représenté par la figure 3, les premier 31 et deuxième 35 arbres sont décalés l'un par rapport à l'autre selon l'envergure du volet, c'est-à-dire selon l'axe Y mais aussi selon un axe vertical Z. Ce deuxième mode de réalisation est notamment appréciable si les dimensions du volet 5 sont particulièrement exiguës.

Par ailleurs, pour limiter l'usure des rotules principale 30 et de fixation 39, ces dernières sont si nécessaire précontraintes pour annuler le jeu séparant leurs cages interne 32, 36 et externe 33, 37.

En effet, les efforts centrifuges s'appliquant sur l'ensemble volet/rotule(s) principale(s)/rotule(s) de fixation exercent une précontrainte naturelle sur les rotules principale 30 et de fixation 39 dans le sens de l'envergure, de., la pale. Si le niveau de cette précontrainte est suffisamment élevé, les cages interne 32, 36 et externe 33, 37 des rotules principale 30 et de fixation 39 restent toujours en contact malgré les autres efforts (dynamiques, aérodynamiques et de commande) auxquelles elles sont soumises dans le sens de la corde de la pale.

Toutefois, si le niveau de la contrainte apporté naturellement par les efforts centrifuges est insuffisant, les rotules principale 30 et de fixation 39 sont mécaniquement précontraintes. Par suite, la pale comporte alors un dispositif de type ressort, introduit entre le volet 5 et le bord de fuite de la pale, qui permet d'exercer un effort permanent tendant par exemple à écarter le volet 5 du bord de fuite de la pale.

La figure 2 présente la cinématique mise en oeuvre selon le premier mode de réalisation pour obtenir le pivotement du volet 5.

Le boîtier électronique commande l'actionneur 10 pour que ce dernier déplace son extrémité 11 conformément à la flèche F". L'actionneur 10 rétracte alors son extrémité 11 ce qui a pour conséquence un déplacement de la bielle 46 vers le longeron 3 de la pale 1. Cette bielle 46 étant reliée à la partie avant 33' de la cage externe 33 de la rotule principale 30, le mouvement de l'actionneur 10 se répercute sur la cage externe 33 qui se déplace selon l'axe X, également dans le sens de la flèche F".

Or, la cage externe 37 de la rotule de fixation 39 est dans l'impossibilité de bouger puisqu'elle est fixée à un point fixe de la pale 1. Ainsi, l'ensemble premier arbre 31/cage interne 32 de la rotule principale 30/ deuxième arbre 35/ cage interne 36 de la rotule de fixation 39/ volet 5 pivote autour de l'axe charnière virtuel Y' qui passe par le centre C de la rotule de fixation 39.

Les premier et deuxième arbres 31 et 35 étant solidaires du volet 5, et accessoirement confondus dans l'exemple décrit par la figure 2, permettent au volet 5 de basculer afin de présenter l'angulation requise par rapport à la pale 1.

En référence à la figure 4, dans une variante de ces modes de réalisation, l'unique bielle 46' est non coudée. Ainsi, si l'encombrement disponible dans la pale s'avère limité, cette variante autorisera tout de même la mise en oeuvre de l'invention.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles- Il est bien sûr envisageable de remplacer un moyen décrit par un moyen équivalent sans sortir du cadre de la présente invention.

De plus, suivant le besoin un nombre différent d'actionneurs pourra être prévu, un actionneur étant associé à une rotule principale. Toutefois, lorsque le volet 5 est pivoté à l'aide de deux actionneurs, les deux rotules principales associées aux deux actionneurs sont de préférence séparées selon l'envergure du volet 5 par une distance qui est égale à la moitié de l'envergure du volet 5.

## Revendications

1. Pale (1) de rotor de giravion comportant au moins un volet (5) orientable de bord de fuite, ledit volet (5) étant apte à effectuer un pivotement autour d'un axe charnière virtuel (Y') orienté sensiblement selon l'envergure de ladite pale (1) et dudit volet (5),
**caractérisée en ce que** ledit volet (5) comporte au moins une rotule principale (30) munie d'une cage interne (32) ainsi que d'une cage externe (33) et d'un premier arbre (31) solidaire dudit volet (5), la partie avant (33') de ladite cage externe (33) de la rotule principale (30) étant reliée à un actionneur linéaire (10) qui est agencé dans ladite pale (1) et qui permet le pivotement dudit volet (5), ledit premier arbre (31) de la rotule principale (30) étant sensiblement perpendiculaire audit axe charnière virtuel (Y') de rotation dudit volet (5).

2. Pale selon la revendication 1,
**caractérisée en ce que** l'axe de symétrie de ladite rotule principale (30) est agencée sensiblement à 25 % de la corde dudit volet (5) en partant du bord d'attaque dudit volet (5).

3. Pale selon l'une quelconque des revendications précédentes,
**caractérisée en ce que** ladite rotule principale (30) est autolubrifiée.

4. Pale selon l'une quelconque des revendications 1 à 3,
**caractérisée en ce que** ladite partie avant (33') de la cage externe (33) de ladite rotule principale (30) est reliée audit actionneur (10) par une unique bielle (46,46').

5. Pale selon l'une quelconque des revendications précédentes,
**caractérisée en ce que** ledit volet comporte une rotule de fixation (39) munie d'une cage externe (37) ainsi que d'une cage interne (36) et d'un deuxième arbre (35), la partie avant (37') de la cage externe (37) de ladite rotule de fixation (39) étant solidaire d'un point fixe de ladite pale.

6. Pale selon la revendication 5,
**caractérisée en ce que** lesdits premier (31) et deuxième (35) arbres sont confondus.

7. Pale selon la revendication 5,
**caractérisée en ce que** lesdits premier (31) et deuxième (35) arbres sont décalés l'un par rapport à l'autre.

8. Pale selon l'une quelconque des revendications 5 à 7,
**caractérisée en ce que** ledit deuxième (35) arbre est solidaire du volet (5).

9. Pale selon l'une quelconque des revendications précédentes,
**caractérisée en ce que**, ladite pale (1) comportant deux actionneurs (10,10') ledit volet (5) est muni de deux rotules principales (30,30'), la distance séparant lesdites deux rotules principales (30,30') selon l'envergure du volet (5) étant égale à la moitié de ladite envergure dudit volet.

## Claims

1. A rotorcraft rotor blade (1) having at least one trailing edge flap (5) that is tiltable, said flap (5) being suitable for pivoting about a virtual hinge axis (Y') extending substantially along the span of said blade (1) and of said flap (5), **characterized in that** said flap (5) has at least one main ball joint (30) provided with an inner cage (32) and an outer cage (33), and with a first shaft (31) secured to said flap (5), the front portion (33') of said outer cage (33) of the main ball joint (30) being connected to a linear actuator (10) that is arranged in said blade (1) and that enables said flap (5) to be pivoted, said first shaft (31) of the main ball joint (30) extending substantially perpendicularly to said virtual hinge axis (Y') about which said flap (5) pivots.

2. A blade according to claim 1, **characterized in that** the axis of symmetry of said main ball joint (30) is arranged substantially at 25% of the chord of said flap (5) going from the leading edge of said flap (5).

3. A blade according to any one of the preceding claims, **characterized in that** said main ball joint (30) is self-lubricating.

4. A blade according to any one of claims 1 to 3, **characterized in that** said front portion (33') of the outer cage (33) of said main ball joint (30) is connected to said actuator (10) by a single connecting rod (46, 46').

5. A blade according to any one of the preceding claims, **characterized in that** said flap has a fastener ball joint (39) provided with an outer cage (37) and an inner cage (36), and with a second shaft (35), the front portion (37') of the outer cage (37) of said fastener ball joint (39) being secured to a stationary point of said blade.

6. A blade according to claim 5, **characterized in that** said first and second shafts (31, 35) coincide.

7. A blade according to claim 5, **characterized in that** said first and second shafts (31, 35) are offset relative to each other.

8. A blade according to any one of claims 5 to 7, **characterized in that** said second shaft (35) is secured to the flap (5).

9. A blade according to any one of the preceding claims, **characterized in that**, for said blade (1) having two actuators (10, 10'), said flap (5) is provided with two main ball joints (30, 30') with the distance between said main ball joints (30, 30') along the span of the flap (5) being equal to half said span of said flap.

## Patentansprüche

1. Rotorblatt (1) eines Drehflüglers, das mindestens eine ausrichtbare Hinterkantenklappe (5) aufweist, wobei die Klappe (5) eine Schwenkbewegung um einen virtuellen Scharnierstift (Y') ausüben kann, der im Wesentlichen gemäß der Schaufelhöhe des Blatts (1) und der Klappe (5) ausgerichtet ist,
**dadurch gekennzeichnet, dass** die Klappe (5) mindestens ein Hauptkugelgelenk (30) aufweist, das mit einem inneren Käfig (32) sowie mit einem äußeren Käfig (33) und mit einer fest mit der Klappe (5) verbundenen ersten Welle (31) versehen ist, wobei der vordere Bereich (33') des äußeren Käfigs (33) des Hauptkugelgelenks (30) mit einem linearen Stellglied (10) verbunden ist, das im Blatt (1) angeordnet ist und das Schwenken der Klappe (5) erlaubt, wobei die erste Welle (31) des Hauptkugelgelenks (30) im Wesentlichen lotrecht zum virtuellen Drehscharnierstift (Y') der Klappe (5) ist.

2. Blatt nach Anspruch 1, **dadurch gekennzeichnet, dass** die Symmetrieachse des Hauptkugelgelenks (30) im Wesentlichen in 25 % der Sehne der Klappe (5) ausgehend von der Vorderkante der Klappe (5) angeordnet ist.

3. Blatt nach einem der vorhergehenden Ansprüche, **dadurch gekennzeichnet, dass** das Hauptkugelgelenk (30) selbstschmierend ist.

4. Blatt nach einem der Ansprüche 1 bis 3, **dadurch gekennzeichnet, dass** der vordere Bereich (33') des äußeren Käfigs (33) des Hauptkugelgelenks (30) mit dem Stellglied (10) über eine einzige Schubstange (46, 46') verbunden ist.

5. Blatt nach einem der vorhergehenden Ansprüche, **dadurch gekennzeichnet, dass** die Klappe ein Befestigungskugelgelenk (39) aufweist, das mit einem äußeren Käfig (37) sowie mit einem inneren Käfig (36) und mit einer zweiten Welle (35) versehen ist, wobei der vordere Bereich (37') des äußeren Käfigs (37) des Befestigungskugelgelenks (39) mit einem ortsfesten Punkt des Blatts fest verbunden ist.

6. Blatt nach Anspruch 5, **dadurch gekennzeichnet, dass** die erste (31) und die zweite (35) Welle zusammenfallen.

7. Blatt nach Anspruch 5, **dadurch gekennzeichnet, dass** die erste (31) und die zweite (35) Welle zueinander versetzt sind.

8. Blatt nach einem der Ansprüche 5 bis 7, **dadurch gekennzeichnet, dass** die zweite Welle (35) fest mit der Klappe (5) verbunden ist.

9. Blatt nach einem der vorhergehenden Ansprüche, **dadurch gekennzeichnet, dass** das Blatt (1) zwei Stellglieder (10, 10') aufweist, wobei die Klappe (5) mit zwei Hauptkugelgelenken (30, 30') versehen ist, wobei der die zwei Hauptkugelgelenke (30, 30') gemäß der Schaufelhöhe der Klappe (5) trennende Abstand gleich der Hälfte der Schaufelhöhe der Klappe ist.
